# EUROPEAN PATENT APPLICATION

(11) **EP 4 718 434 A1**
(43) Date of publication of application: **01.04.2026**
(21) Application number: 24838922.3
(22) Date of filing: 26.08.2024
(51) Int. Cl.: G09G 5/10, G09G 3/3208

(54) **DISPLAY SCREEN BRIGHTNESS ADJUSTMENT METHOD, ELECTRONIC DEVICE, AND COMPUTER STORAGE MEDIUM**

(30) Priority: 12.07.2023 CN 202310862024
(71) Applicant: Honor Device Co., Ltd., Shenzhen, Guangdong 518040 (CN)
(72) Inventor: YUE, Lingyan, Shenzhen, Guangdong 518040 (CN)
(74) Representative: Isarpatent
(86) International application number: PCT/CN2024/114609
(87) International publication number: WO 2025/011671

(57) **Abstract**

This application relates to the field of display technologies, and provides a display screen brightness adjustment method, an electronic device, and a computer storage medium. The method includes: A display driver of an electronic device controls a display driver integrated circuit to refresh an image to a display screen at a refresh rate in a first queue, where the first queue is a first-type refresh rate queue or a second-type refresh rate queue; the display driver receives a dimming instruction, where the dimming instruction indicates to adjust brightness of the display screen; and in response to receiving the dimming instruction, if the first queue is the first-type refresh rate queue, the display driver controls the display driver integrated circuit to refresh an image to the display screen at a refresh rate of 60 Hz, and then controls, based on the dimming instruction, the display driver integrated circuit to adjust the brightness of the display screen; or if the first queue is the second-type refresh rate queue, the display driver controls, based on the dimming instruction, the display driver integrated circuit to adjust the brightness of the display screen. This avoids a case that dimming is synchronized with image refreshing of the DDIC due to synchronization between the dimming instruction and a TE signal without image refreshing, thereby avoiding a display flickering problem.

## Description

This application claims priority to Chinese Patent Application No. 202310862024.7, filed with the China National Intellectual Property Administration on July 12, 2023 and entitled "DISPLAY SCREEN BRIGHTNESS ADJUSTMENT METHOD, ELECTRONIC DEVICE, AND COMPUTER STORAGE MEDIUM", which is incorporated herein by reference in its entirety.

### TECHNICAL FIELD

Embodiments of this application relate to the field of electronic device display technologies, and in particular, to a display screen brightness adjustment method, an electronic device, and a computer storage medium.

### BACKGROUND

With continuous development of a display screen technology of an electronic device (for example, a mobile phone), increasingly more display screens that can support a plurality of refresh rates emerge. For example, a display screen that uses a low temperature polycrystalline oxide (low temperature polycrystalline oxide, LTPO) screen technology may support a plurality of refresh rates such as 120 Hz, 90 Hz, 60 Hz, 40 Hz, 30 Hz, 10 Hz, and 1 Hz. A higher refresh rate of the display screen represents a higher display frame rate that can be supported by the display screen, and corresponding picture display is smoother. A lower refresh rate of the display screen can reduce more power consumption although a lower display frame rate can be supported. Therefore, to reduce specific power consumption as much as possible while ensuring a smooth picture, an adaptive refresh rate technology appears currently.

A principle of a conventional adaptive refresh rate technology is mainly that a refresh rate switching instruction is delivered to a display driver integrated circuit (digital display indicator control, DDIC) based on a running scenario of an application (application, APP), to switch to an adapted refresh rate. Therefore, the adaptive refresh rate technology cannot be adapted to a case that running scenarios cannot be distinguished, and a refresh rate of the DDIC cannot be decreased in the case that the running scenarios cannot be distinguished, which increases unnecessary power consumption.

To resolve this problem, a new adaptive refresh rate method appears currently. However, the adaptive refresh rate method easily conflicts with dimming of the display screen. If brightness adjustment is performed on the display screen of the electronic device in a case that the electronic device applies the adaptive refresh rate method, a display flickering problem is prone to occur.

### SUMMARY

Embodiments of this application provide a display screen brightness adjustment method, an electronic device, and a computer storage medium, to resolve a display flickering problem caused by a conflict between an adaptive refresh rate method and dimming.

To achieve the foregoing objective, the following technical solutions are used in embodiments of this application:

According to a first aspect, a display screen brightness adjustment method is provided. The method includes: A display driver of an electronic device controls a display driver integrated circuit to refresh an image to a display screen at a refresh rate in a first queue, where the first queue is a first-type refresh rate queue or a second-type refresh rate queue, the first-type refresh rate queue is a refresh rate queue that includes at least two refresh rates and in which the refresh rates are distributed from high to low, and the second-type refresh rate queue is a refresh rate queue in which the last refresh rate has a refresh rate value and a refresh rate before the last refresh rate is empty; the display driver receives a dimming instruction, where the dimming instruction indicates to adjust brightness of the display screen; and in response to receiving the dimming instruction, if the first queue is the first-type refresh rate queue, the display driver controls the display driver integrated circuit to refresh an image to the display screen at a refresh rate of 60 Hz, and then controls, based on the dimming instruction, the display driver integrated circuit to adjust the brightness of the display screen; or if the first queue is the second-type refresh rate queue, the display driver controls, based on the dimming instruction, the display driver integrated circuit to adjust the brightness of the display screen.

Because the first-type refresh rate queue is the refresh rate queue in which the refresh rates are distributed from high to low, when the DDIC refreshes an image based on the first-type refresh rate queue, a frequency of reporting a TE signal may be changed due to a decreased refresh rate. In this case, it is necessary to disable a TE signal shielding function and implement a TE skipping function in cooperation. Therefore, there may be a TE signal without corresponding image refreshing when the electronic device works based on the first-type refresh rate queue. In this case, the first-type refresh rate queue is switched to a fixed refresh rate of 60 Hz, so that the TE signal without corresponding image refreshing originally caused by image refreshing at a refresh rate in the first-type refresh rate queue is converted into a TE signal with corresponding image refreshing. Subsequently, delivering the dimming instruction in a sync TE manner on this basis is to be synchronized with the TE signal with corresponding image refreshing, thereby ensuring that image refreshing of the DDIC is synchronized with delivery of the dimming instruction.

In a possible implementation of the first aspect, the method further includes: In response to receiving the dimming instruction, the display driver starts a timer to perform countdown of first preset duration when the display driver integrated circuit starts to refresh an image to the display screen at the refresh rate of 60 Hz; and after the countdown ends, the display driver controls the display driver integrated circuit to refresh an image to the display screen at a refresh rate in the first-type refresh rate queue. In this way, the DDIC is controlled to switch back to an original refresh rate queue after the dimming ends, to ensure that the DDIC refreshes an image normally.

It should be noted that in this application, in response to receiving the dimming instruction, the display driver starts the timer only when the display driver integrated circuit starts to refresh an image to the display screen at the refresh rate of 60 Hz. If the display driver does not receive the dimming instruction or the display driver has adjusted the brightness of the display screen based on the dimming instruction, the display driver does not start the timer to perform countdown even if the display driver integrated circuit refreshes an image to the display screen at the refresh rate of 60 Hz.

In a possible implementation of the first aspect, in response to receiving the dimming instruction, the method further includes: The display driver determines whether the timer is counting down; and if the timer is counting down, the display driver controls, based on the dimming instruction, the display driver integrated circuit to adjust the brightness of the display screen; or if the timer is not counting down, the display driver controls the display driver integrated circuit to refresh an image to the display screen at the refresh rate of 60 Hz, and then controls, based on the dimming instruction, the display driver integrated circuit to adjust the brightness of the display screen.

The timer is configured to count d own to control switching of a refresh rate queue. Based on this, the display driver first determines, in response to the dimming instruction, whether the timer is counting down, so that it can be determined whether a refresh rate queue of the DDIC is currently in a state of refreshing the image at the refresh rate of 60 Hz. If yes, the display driver may directly respond to the dimming instruction to control the DDIC to perform dimming. This avoids a case that the DDIC needs to be repeatedly controlled to switch a refresh rate if the dimming instruction is frequently received within a short period, thereby saving resources.

In this application, only after receiving the dimming instruction, the display driver starts the timer to perform countdown. Therefore, if the display driver does not receive the dimming instruction or has adjusted the brightness of the display screen, the timer does not count down, regardless of whether the display driver integrated circuit refreshes an image to the display screen at the refresh rate in the first-type refresh rate queue or refreshes an image to the display screen at the refresh rate in the second-type refresh rate queue. Therefore, in this implementation, if the timer is not counting down, the display driver needs to control, based on the dimming instruction after the display driver integrated circuit refreshes an image to the display screen at the refresh rate of 60 Hz, the display driver integrated circuit to adjust the brightness of the display screen.

In a possible implementation of the first aspect, the method further includes: In response to receiving the dimming instruction, if the timer is counting down, the display driver initializes the timer to count down again.

In a possible implementation of the first aspect, the display driver integrated circuit is a display driver integrated circuit without a TEI function. Before the display driver controls, based on the dimming instruction, the display driver integrated circuit to adjust the brightness of the display screen, the method further includes: The display driver receives a first TE signal, and determines whether the first TE signal is a skipped TE signal, where the first TE signal is a TE signal that is generated by the display driver integrated circuit, that is closest to receiving time of the dimming instruction, and that is not processed by the display driver; and if the first TE signal is the skipped TE signal, the display driver gives up reporting the first TE signal, and then controls, based on the dimming instruction, the display driver integrated circuit to adjust the brightness of the display screen; or if the first TE signal is a non-skipped TE signal, the display driver controls, based on the dimming instruction, the display driver integrated circuit to adjust the brightness of the display screen.

When a second DDIC implements the TE skipping function, a corresponding skipped TE signal has no corresponding image refreshing. In this way, to avoid a case that dimming is not synchronized with image refreshing due to synchronization between the dimming instruction and the skipped TE signal, after a TE signal is determined to be the skipped TE signal, the second DDIC is controlled to perform dimming after waiting for the TE signal to be skipped and not reported, thereby ensuring that dimming is synchronized with image refreshing.

In a possible implementation of the first aspect, before the determining whether the first TE signal is a skipped TE signal, the method further includes: The display driver determines a time interval between processing time of a second TE signal and current time is within second preset duration, where the second TE signal is a TE signal that is generated by the display driver integrated circuit, that is closest to the receiving time of the dimming instruction, and that is processed by the display driver; and if the time interval is within the second preset duration, after the time interval between the processing time of the second TE signal and the current time is greater than the second preset duration, the display driver determines whether the first TE signal is the skipped TE signal; or if the time interval is not within the second preset duration, the display driver determines whether the first TE signal is the skipped TE signal.

A process of determining whether the first TE signal corresponding to the dimming instruction is the skipped TE signal requires specific processing time. Therefore, if a moment of delivering the dimming instruction by an upper layer to the display driver is very close to a moment of generating the first TE signal by the DDIC, the first TE signal may be generated by the DDIC and processed by the display driver before the display driver completes a determining procedure. As a result, backlight is still not synchronized with image refreshing because the first TE signal is missed. Based on this, it is actively determined, based on the time interval and the second preset duration, to wait for a possible missed TE signal to be processed and then perform dimming, so that missing of the TE signal can be avoided. This can avoid a problem that image refreshing is not synchronized with dimming because a time interval between the dimming instruction and a TE signal is excessively short.

In another possible implementation of the first aspect, the second preset duration is determined by a generation period of a TE signal and determining time required by the display driver to determine whether the first TE signal is the skipped TE signal.

In another possible implementation of the first aspect, that the display driver controls, based on the dimming instruction, the display driver integrated circuit to adjust the brightness of the display screen includes: When receiving a TE signal generated by the display driver integrated circuit, the display driver delivers the dimming instruction to the display driver integrated circuit to control the display driver integrated circuit to adjust the brightness of the display screen.

In another possible implementation of the first aspect, the method further includes: In a process in which the display driver integrated circuit adjusts the brightness of the display screen, the display driver receives a refresh rate queue switching instruction, and after waiting for the display driver integrated circuit to complete adjustment of the brightness of the display screen, the display driver controls, in response to the refresh rate queue switching instruction, the display driver integrated circuit to switch a refresh rate queue. In this way, the dimming procedure can be prevented from being affected.

According to a second aspect, this application provides an electronic device. The electronic device includes a display screen, a memory, a display driver integrated circuit, and one or more processors. The display screen, the memory, and the display driver integrated circuit are coupled to the processor. The memory stores one or more computer program codes, and the computer program code includes computer instructions. When the processor executes the computer instructions, the electronic device is enabled to perform the following steps: A display driver controls the display driver integrated circuit to refresh an image to the display screen at a refresh rate in a first queue, where the first queue is a first-type refresh rate queue or a second-type refresh rate queue, the first-type refresh rate queue is a refresh rate queue that includes at least two refresh rates and in which the refresh rates are distributed from high to low, and the second-type refresh rate queue is a refresh rate queue in which the last refresh rate has a refresh rate value and a refresh rate before the last refresh rate is empty; the display driver receives a dimming instruction, where the dimming instruction indicates to adjust brightness of the display screen; in response to receiving the dimming instruction, if the first queue is the first-type refresh rate queue, the display driver controls the display driver integrated circuit to refresh an image to the display screen at a refresh rate of 60 Hz, and then controls, based on the dimming instruction, the display driver integrated circuit to adjust the brightness of the display screen; and if the first queue is the second-type refresh rate queue, the display driver, based on the dimming instruction, controls the display driver integrated circuit to adjust the brightness of the display screen.

For example, the display driver of the electronic device may be a software code or a software module that runs in the processor of the electronic device.

In a possible implementation of the second aspect, when the foregoing computer instructions are executed by the processor, the electronic device is enabled to further perform the following steps: In response to receiving the dimming instruction, the display driver starts a timer to perform countdown of first preset duration when the display driver integrated circuit starts to refresh an image to the display screen at the refresh rate of 60 Hz; and after the countdown ends, the display driver controls the display driver integrated circuit to refresh an image to the display screen at a refresh rate in the first-type refresh rate queue.

In a possible implementation of the second aspect, when the foregoing computer instructions are executed by the processor, the electronic device is enabled to further perform the following steps: The display driver determines whether the timer is counting down; and if the timer is counting down, the display driver controls, based on the dimming instruction, the display driver integrated circuit to adjust the brightness of the display screen; or if the timer is not counting down, the display driver controls the display driver integrated circuit to refresh an image to the display screen at the refresh rate of 60 Hz, and then controls, based on the dimming instruction, the display driver integrated circuit to adjust the brightness of the display screen.

In a possible implementation of the second aspect, when the foregoing computer instructions are executed by the processor, the electronic device is enabled to further perform the following step: In response to receiving the dimming instruction, if the timer is counting down, the display driver initializes the timer to count down again.

In a possible implementation of the second aspect, when the foregoing computer instructions are executed by the processor, the electronic device is enabled to further perform the following steps: The display driver receives a first TE signal, and determines whether the first TE signal is a skipped TE signal, where the first TE signal is a TE signal that is generated by the display driver integrated circuit, that is closest to receiving time of the dimming instruction, and that is not processed by the display driver; and if the first TE signal is the skipped TE signal, the display driver gives up reporting the first TE signal, and then controls, based on the dimming instruction, the display driver integrated circuit to adjust the brightness of the display screen; or if the first TE signal is a non-skipped TE signal, the display driver controls, based on the dimming instruction, the display driver integrated circuit to adjust the brightness of the display screen.

In a possible implementation of the second aspect, when the foregoing computer instructions are executed by the processor, the electronic device is enabled to further perform the following steps: The display driver determines whether a time interval between processing time of a second TE signal and current time is within second preset duration, where the second TE signal is a TE signal that is generated by the display driver integrated circuit, that is closest to the receiving time of the dimming instruction, and that is processed by the display driver; and if the time interval is within the second preset duration, after the time interval between the processing time of the second TE signal and the current time is greater than the second preset duration, the display driver determines whether the first TE signal is the skipped TE signal; or if the time interval is not within the second preset duration, the display driver determines whether the first TE signal is the skipped TE signal.

In a possible implementation of the second aspect, when the foregoing computer instructions are executed by the processor, the electronic device is enabled to further perform the following step: the second preset duration is determined by a generation period of a TE signal and determining time required by the display driver to determine whether the first TE signal is the skipped TE signal.

In a possible implementation of the second aspect, when the foregoing computer instructions are executed by the processor, the electronic device is enabled to further perform the following step: When receiving a TE signal generated by the display driver integrated circuit, the display driver delivers the dimming instruction to the display driver integrated circuit to control the display driver integrated circuit to adjust the brightness of the display screen.

In a possible implementation of the second aspect, when the foregoing computer instructions are executed by the processor, the electronic device is enabled to perform the following steps: In a process in which the display driver integrated circuit adjusts the brightness of the display screen, the display driver receives a refresh rate queue switching instruction, and after waiting for the display driver integrated circuit to complete adjustment of the brightness of the display screen, the display driver controls, in response to the refresh rate queue switching instruction, the display driver integrated circuit to switch a refresh rate queue.

According to a third aspect, this application provides a computer-readable storage medium, where the computer-readable storage medium stores a computer program, and when the computer program is executed by a processor of an electronic device, the electronic device is enabled to perform the display screen brightness adjustment method according to any one of the first aspect and the possible design manners of the first aspect.

According to a fourth aspect, this application provides a computer program product, and when the computer program product runs on a computer, the computer is enabled to perform the method according to any one of the first aspect and the possible design manners of the first aspect. The computer may be the foregoing electronic device.

It may be understood that, for beneficial effects that can be achieved by the electronic device according to any one of the second aspect and the possible design manners of the second aspect, the computer-readable storage medium according to the third aspect, and the computer program product according to the fourth aspect, refer to the beneficial effects in any one of the first aspect and the possible design manners of the first aspect. Details are not described herein again.

### BRIEF DESCRIPTION OF DRAWINGS

FIG. 1 is a schematic diagram in which a refresh rate corresponds to an imaging refreshing manner according to an embodiment of this application;
FIG. 2 is a schematic diagram of an interface of a video scenario with a bullet-screen comment according to an embodiment of this application;
FIG. 3 is a schematic diagram of an interface of a video scenario without a bullet-screen comment according to an embodiment of this application;
FIG. 4 is a schematic diagram in which a DDIC refreshes an image repeatedly according to an embodiment of this application;
FIG. 5 is a first schematic diagram of desynchronization between image refreshing of a DDIC and delivery of a dimming instruction according to an embodiment of this application;
FIG. 6 is a first schematic flowchart of a display screen brightness adjustment method according to an embodiment of this application;
FIG. 7 is a first schematic diagram of synchronization between image refreshing of a DDIC and delivery of a dimming instruction according to an embodiment of this application;
FIG. 8 is a schematic diagram of a structure of an electronic device according to an embodiment of this application;
FIG. 9 is a block diagram of a software structure of an electronic device according to an embodiment of this application;
FIG. 10 is a second schematic flowchart of a display screen brightness adjustment method according to an embodiment of this application;
FIG. 11 is a schematic diagram of a dimming principle according to an embodiment of this application;
FIG. 12 is a third schematic diagram of desynchronization between image refreshing of a DDIC and delivery of a dimming instruction according to an embodiment of this application;
FIG. 13 is a third schematic flowchart of a display screen brightness adjustment method according to an embodiment of this application;
FIG. 14 is a second schematic diagram of synchronization between image refreshing of a DDIC and delivery of a dimming instruction according to an embodiment of this application; and
FIG. 15 is a schematic diagram of a chip system according to an embodiment of this application.

### DESCRIPTION OF EMBODIMENTS

To clearly describe the technical solutions in the embodiments of this application, the following briefly describes some terms and technologies in the embodiments of this application.

A frame rate (frame rate), also referred to as a frame rate, is a rate at which a bitmap image in a unit of frame (Frame) is continuously displayed on a display screen, and is usually in a unit of a quantity of frames transmitted per second (frame per second, FPS).

A refresh rate is a quantity of times that a picture on a screen is refreshed per second, which may also be referred to as a frame rate of a display screen, and is in a unit of Hz. For example, a refresh rate of 60 Hz means that a picture on the display screen can be refreshed 60 times for display within 1 second. In other words, the refresh rate is a hardware performance parameter of a display screen of an electronic device, and is used to represent a quantity of times that a displayed picture can be refreshed per second on the display screen.

A display frame rate of an application is a speed at which the application draws a picture (namely, image data). The display frame rate of the application usually may be represented by using a quantity of picture frames transmitted per second (frame per second, fps). In other words, the display frame rate of the application is a rate at which the application outputs the image data to a display screen.

A tearing effect (tearing effect, TE) signal is a signal generated by a DDIC, and is used to prevent a tearing phenomenon from occurring when a picture is refreshed in an image display process. The tear phenomenon refers to a phenomenon that a part of a new picture and a part of an old picture are displayed when a picture is refreshed.

An adaptive refresh rate technology means dynamically adjusting a refresh rate of a screen based on a use scenario (running scenario of an APP) and a requirement of a user.

Image sending means that an application processor (application processor, AP) side writes to-be-displayed image data obtained after drawing and rendering into a random access memory (random access memory, RAM) of a DDIC by using a layer composition service (surface flinger, SF).

Image refreshing means that a DDIC reads to-be-displayed image data from a RAM at a refresh rate, and refreshes and displays the to-be-displayed image data to a corresponding display screen.

The following clearly and completely describes the technical solutions in the embodiments of this application with reference to the accompanying drawings in the embodiments of this application. In the description of the embodiments of this application, terms used in the following embodiments are merely intended to describe particular embodiments, and are not intended to limit this application. In addition, for ease of clearly describing the technical solutions in the embodiments of this application, in the embodiments of this application, words such as "first" and "second" are used to distinguish same items or similar items whose functions and roles are basically the same. A person skilled in the art may understand that the words such as "first" and "second" do not limit a quantity or an execution sequence, and the words such as "first" and "second" do not indicate a definite difference. In the description of the embodiments of this application, unless otherwise specified, "a plurality of" means two or more.

With continuous development of a display screen technology of an electronic device (for example, a mobile phone), increasingly more display screens that can support a plurality of refresh rates emerge. For example, a display screen that uses a low temperature polycrystalline oxide (low temperature polycrystalline oxide, LTPO) screen technology may support a plurality of refresh rates such as 120 Hz, 90 Hz, 60 Hz, 40 Hz, 30 Hz, 10 Hz, and 1 Hz. 120 Hz and 90 Hz are base frequencies of the LTPO, and other refresh rates that can be supported are generated in a frame skipping (frameskip) manner based on 120 Hz, so that a lowest refresh rate of 1 Hz can be achieved.

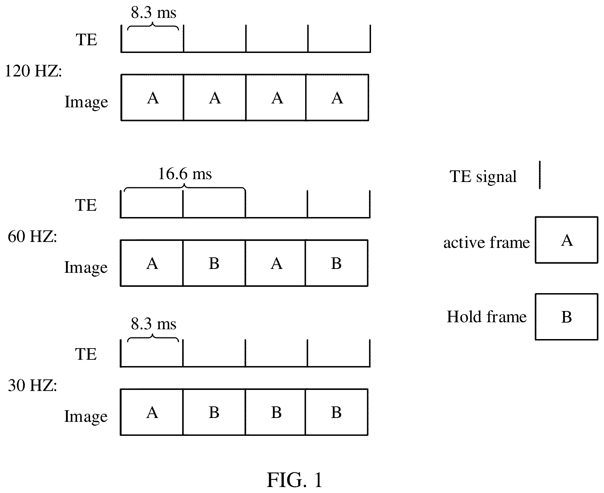

For example, the refresh rate of 120 Hz indicates that a picture on the display screen can be refreshed 120 times within 1 second. Therefore, 120 Hz means that a frame of image is refreshed in a period of 8.3 ms (milliseconds), and an image in each period is an active (active) frame. Refer to a corresponding illustration of 120 Hz in FIG. 1. The active frame may be understood as an image frame sent by an upper-layer SF to a lower-layer DDIC.

In this case, a principle of achieving the refresh rate of 60 Hz based on 120 Hz is that 8.3 ms is also used as a period, but each active frame is followed by one hold frame. The hold frame is that a DDIC keeps one frame not to be refreshed after refreshing one active frame. It may be understood that there is no corresponding image content in the hold frame. In other words, at the refresh rate of 60 Hz, one active frame appears every 16.6 milliseconds. Refer to a corresponding illustration of 60 Hz in FIG. 1. It may be learned that, compared with refreshing one active frame in a period of 8.3 ms, the DDIC implements frame skipping by refreshing one frame of image and stopping one frame of image (commonly referred to as scanning one and stopping one), so that a time interval for image refreshing between two active frames is prolonged by half, thereby achieving the refresh rate of 60 Hz based on 120 Hz.

Likewise, it may be learned that, achieving 30 Hz based on 120 Hz is that each active frame is followed by three hold frames, which is commonly referred to as scanning one and stopping three. Refer to a corresponding illustration of 30 Hz in FIG. 1. Achieving 10 Hz based on 120 Hz is that each active frame is followed by 11 hold frames, which is commonly referred to as scanning one and stopping 11. Achieving 1 Hz based on 120 Hz is that each active frame is followed by 119 hold frames, which is commonly referred to as scanning one and stopping 119.

A higher refresh rate of the display screen represents a higher display frame rate that can be supported by the display screen, and corresponding picture display is smoother. A lower refresh rate of the display screen can reduce more power consumption although a lower display frame rate can be supported. Therefore, to reduce specific power consumption as much as possible while ensuring a smooth picture, an adaptive refresh rate technology appears currently.

To be specific, generally, in a process of running a high frame rate application or performing a sliding operation, a refresh rate switching instruction is delivered to the DDIC to adaptively set the display screen to a high refresh rate. On the contrary, in a process of running a low frame rate application, a refresh rate switching instruction is delivered to the DDIC to adaptively set the display screen to a low refresh rate.

For example, if it is detected that a current running scenario of an APP in the electronic device is a high frame rate game scenario or a fast sliding scenario, to improve smoothness of a game picture or picture sliding, a display driver (display driver) delivers a refresh rate switching instruction to the DDIC to switch a refresh rate of the display screen to a high refresh rate that can match the high frame rate game scenario or the fast sliding scenario. It is assumed that a current refresh rate of the display screen is 60 Hz. When it is detected that a running scenario of the APP changes and the refresh rate needs to be increased (for example, running a high frame rate game), the display driver may deliver a refresh rate switching instruction to the DDIC to switch the refresh rate to 120 Hz. When it is detected that the running scenario of the APP changes and the refresh rate needs to be decreased (for example, exiting the high frame rate game), the display driver may deliver a refresh rate switching instruction again to the DDIC to switch the refresh rate from 120 Hz to 60 Hz.

It may be learned that, compared with a previous display screen that can fixedly support only one refresh rate, the display screen that can support a plurality of refresh rates may be adapted to more running scenarios of an APP based on an actual application situation, thereby reducing power consumption while ensuring a smooth picture.

However, currently, most APPs are developed by a third party, and are configured to run in the electronic device through downloading and installation. Therefore, there is a problem of adaptability between the electronic device and the APP. When the adaptability is high, an upper layer of the electronic device can well distinguish running scenarios of the APP, and therefore can directly deliver, based on a running scenario, a refresh rate switching instruction to control the lower-layer DDIC to switch to a refresh rate that matches the running scenario, thereby achieving the adaptive refresh rate technology.

However, when the adaptability between the electronic device and the APP is low, the upper layer of the electronic device may be unable to well distinguish the running scenarios of the APP, and therefore cannot accurately deliver, based on a running scenario, the refresh rate switching instruction to the lower-layer DDIC to switch to a refresh rate that matches the running scenario of the APP, resulting in increased power consumption. In other words, a conventional adaptive refresh rate technology cannot be adapted to a case that running scenarios cannot be distinguished, and a refresh rate of the DDIC cannot be decreased in the case that the running scenarios cannot be distinguished, which increases unnecessary power consumption.

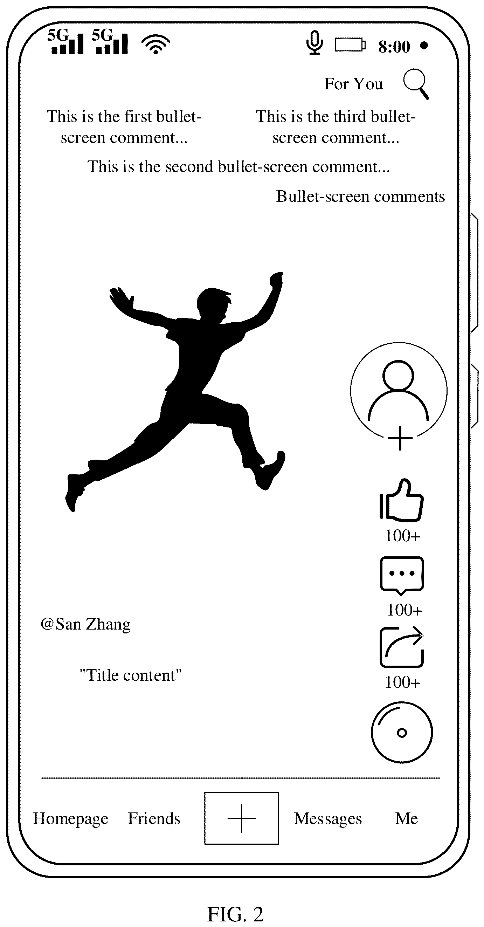

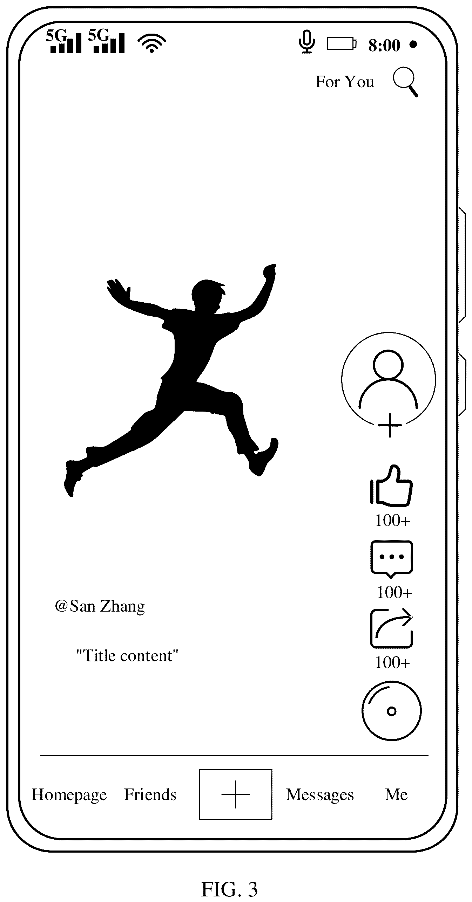

For example, a short video APP with a bullet-screen function is used as an example. If the short video APP is in a video play scenario with a bullet-screen comment, referring to FIG. 2, to ensure smoothness of the bullet-screen comment, a display frame rate required by the APP is usually 60 Hz. Correspondingly, a refresh rate of the display screen needs to be adapted to 60 Hz to synchronously maintain smoothness of running and display of the bullet-screen comment. However, in a video play scenario without a bullet-screen comment, referring to FIG. 3, to reduce power consumption, a display frame rate of the APP is usually adapted to 30 Hz to ensure smoothness of video play. Therefore, when a running scenario in the short video APP is switched from a video with a bullet-screen comment to a video without a bullet-screen comment, an SF module on the AP side may decrease a drawing rate to 30 Hz based on the display frame rate of 30 Hz required by the short video APP. However, because of a background adaptability problem between the electronic device and the short video APP, it cannot be well distinguished whether a current video scenario has a bullet-screen comment. Therefore, when the running scenario in the short video APP is switched to the video without a bullet-screen comment, it is not possible to accurately deliver, to the lower-layer DDIC, a refresh rate switching instruction indicating to switch to the refresh rate of 30 Hz. As a result, after the upper-layer SF has decreased the drawing rate to 30 Hz, to correspondingly reduce an image sending frequency to 30 Hz, the lower-layer DDIC still refreshes an image at the refresh rate of 60 Hz, which increases unnecessary power consumption.

The following describes the foregoing problems in combination with a process of image drawing and sending of the SF and image refreshing of the DDIC.

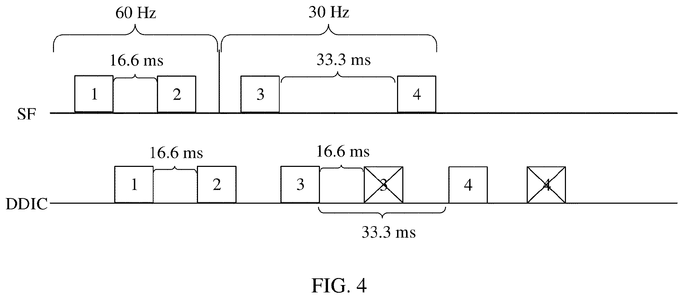

Referring to FIG. 4, rectangles marked with numbers 1, 2, 3, and 4 respectively represent the first frame of image, the second frame of image, the third frame of image, and the fourth frame of image. The first frame of image and the second frame of image are images drawn at a display frame rate of 60 Hz (corresponding to the video scenario with a bullet-screen comment of the short video APP). In other words, time intervals between image drawing, between image sending, and between image refreshing for display of the two frames of images, namely the first frame of image and the second frame of image, are all two periods of 16.6 ms. When the short video APP switches to the video scenario without a bullet-screen comment, the SF decreases the drawing rate to 30 Hz for a requirement of the display frame rate of 30 Hz required in the video scenario without a bullet-screen comment, and completes drawing and image sending of the third frame of image and the fourth frame of image based on the rate of 30 Hz. In other words, time intervals between image drawing, between image sending, and between image refreshing for display of the two frames of images, namely the third frame of image and the fourth frame of image, are all four periods of 33.3 ms. However, because the upper layer of the electronic device cannot distinguish scenarios to deliver, to the DDIC, an instruction indicating to switch to the refresh rate of 30 Hz, the DDIC still refreshes an image at the refresh rate of 60 Hz. Therefore, in a gap in which the upper-layer SF does not send an image, because no new image (active frame) is transmitted, the DDIC repeatedly refreshes the third frame of image and the fourth frame of image (rectangles with diagonal lines shown in the figure), which increases unnecessary power consumption.

To resolve a problem that unnecessary power consumption increases because running scenarios of an APP cannot be distinguished, and a refresh rate switching instruction cannot be accurately delivered to the DDIC to decrease a refresh rate, a new adaptive refresh rate method appears, and an image display method is proposed based on the new adaptive refresh rate method.

A main implementation principle of the image display method is as follows: An upper layer of an electronic device dynamically configures a refresh rate queue SEQ for a DDIC based on a data structure, that is, a queue (sequeue, SEQ) used to configure a refresh rate in the DDIC, and based on a display frame rate of an APP displayed on a display screen and a lowest refresh rate of the display screen. The refresh rate queue may be a first-type refresh rate queue in which refresh rates are distributed from high to low or a second-type refresh rate queue in which the last refresh rate is equal to the display frame rate and each refresh rate before the last refresh rate is empty. Then, when a display driver controls the DDIC to refresh an image to the display screen based on the configured first-type refresh rate queue, the display driver delivers, based on an image sending frequency of an upper-layer SF module on an AP side, a refresh rate switching instruction to the DDIC to control the DDIC to switch to a refresh rate in the configured first-type refresh rate queue. When the DDIC switches from a high refresh rate to a low refresh rate based on the image sending frequency, an adaptive decrease in the refresh rate is implemented, thereby reducing unnecessary power consumption.

Specifically, the SEQ may be understood as a functional module that is provided in the DDIC for a user to configure a refresh rate. Based on a type of the DDIC, lengths that can be supported by the queue of the DDIC are different. In other words, a length of the refresh rate queue SEQ configured for the DDIC depends on the type of the DDIC.

For example, two types of DDICs: Model 37900 and Model 37701A, which are currently most commonly used by the electronic device, are used as an example. The DDIC of Model 37900 is a DDIC (referred to as a first DDIC below) with a tearing interposition (tearing interposition, TEI) function, and a queue length that can be supported by the DDIC is 5. To be specific, a refresh rate queue SEQ of the first DDIC may include five queue values, which is equivalent to the following: the SEQ of the first DDIC=[SEQ1, SEQ2, SEQ3, SEQ4, SEQ5]. However, the DDIC of Model 37701A is a DDIC (referred to as a second DDIC below) without the tearing interposition (tearing interposition, TEI) function, and a queue length that can be supported by the DDIC is 4. To be specific, a SEQ of the second DDIC may include four queue values, which is equivalent to the following: the SEQ of the second DDIC=[SEQ1, SEQ2, SEQ3, SEQ4].

For example, the electronic device is a mobile phone. For a mobile phone with only a single display screen, the display screen may use the DDIC of Model 37701A or the DDIC of Model 37900 based on an actual requirement. However, for a mobile phone that includes two display screens, for example, a foldable mobile phone, the first DDIC and/or the second DDIC may be selected for application based on different requirements of an inner screen (a display screen for operation by a user when the foldable mobile phone is in an unfolded state) and an outer screen (a display screen for operation by a user when the foldable mobile phone is in a folded state). For example, the DDIC of Model 37900 is usually applied to the existing inner screen, and the DDIC of Model 37701A is usually applied to the outer screen.

Queue values (such as SEQ i, where i=1, 2, ..., and n, and n=4 or n=5) in the refresh rate queue SEQ may be set to different refresh rates, and the different refresh rates correspond to different image refreshing manners. That the DDIC refreshes an image based on the SEQ means refreshing an image in an image refreshing manner of a refresh rate corresponding to the SEQ, which is equivalent to working at the refresh rate. For example, if a specific queue value in the SEQ of the DDIC is set to a refresh rate of 60 Hz, when the DDIC works based on the queue value of 60 Hz, the DDIC refreshes an image in a manner of scanning one and stopping one, thereby achieving the refresh rate of 60 Hz. However, if the queue value in the SEQ is set to 30 Hz, when the DDIC works based on the queue value of 30 Hz, the DDIC refreshes an image in a manner of scanning one and stopping three, thereby achieving the refresh rate of 30 Hz. In addition, each SEQ i in the refresh rate queue SEQ may be switched in an enqueuing order. Furthermore, in the DDIC, it is restricted that the refresh rates SEQi in the refresh rate queue SEQ can only be sequentially switched in a queuing order, and it is also restricted that jump switching is not allowed, but direct switching to the SEQ1 is allowed. In other words, the DDIC can only switch from the SEQ1 to the SEQ2, and switch from the SEQ2 to the SEQ3, but cannot switch directly from the SEQ1 to the SEQ3, and even cannot switch from the SEQ3 to the SEQ1. However, the DDIC can switch directly from the SEQ3 or the SEQ2 to the SEQ1.

Based on this, to reduce unnecessary power consumption by achieving an adaptive decrease of a refresh rate when running scenarios cannot be distinguished, in the image display method, the refresh rate queue SEQ in which refresh rates are distributed from high to low is configured for the DDIC through dynamic configuration. For example, the first refresh rate SEQ1 in the refresh rate queue SEQ is set to a high refresh rate, and other refresh rates are set to low refresh rates lower than the first refresh rate SEQ1.

For example, using the SEQ of the first DDIC as an example, the SEQ1 is set to a high refresh rate, and the SEQ2, the SEQ3, the SEQ4, and the SEQ5 are set to low refresh rates. For example, the SEQ1 is set to 60 Hz, and the SEQ2, the SEQ3, the SEQ4, and the SEQ5 are set to 30 Hz.

Then, the DDIC refreshes, based on a running scenario of an upper-layer application, an image for the refresh rate queue SEQ configured for the DDIC. A process of image refreshing is as follows: The DDIC first works in an image refreshing manner corresponding to the first refresh rate SEQ1 in the queue. While the image is refreshed, the display driver determines, based on a TE signal generated by the DDIC and reported to the upper-layer SF, whether the upper layer sends an image stably.

In a display technology, generally, when reporting a TE signal, the DDIC obtains a frame of image sent from the upper layer. Therefore, if no corresponding image is obtained after the TE signal is reported, it indicates that the SF module may reduce an image drawing and image sending speed based on a display frame rate of a running scenario of an APP (for example, when a display frame rate required by the APP is decreased from 60 Hz to 30 Hz after running of a bullet-screen comment is completed or the bullet-screen comment is turned off). In other words, the upper-layer SF currently has no a new image that needs to be sent for display, and therefore does not respond to the TE signal reported by the DDIC to implement image sending. In this case, if the DDIC still works at the refresh rate corresponding to the SEQ1, a repeated image refreshing phenomenon occurs, resulting in a problem of increasing unnecessary power consumption.

Therefore, when the display driver determines, based on the TE signal, that the upper-layer SF does not send an image, the display driver controls the DDIC to switch to a next refresh rate in an arrangement order of the refresh rates SEQ i in the refresh rate queue SEQ, for example, switching from the SEQ1 to the SEQ2. Then the DDIC refreshes an image at a refresh rate currently switched to, that is, if a specific SEQi is currently switched to, a refresh rate corresponding to the SEQi is used to refresh an image.

Switching between the SEQ2, the SEQ3, the SEQ4, and the SEQ5 is also performed in the same manner when it is determined that the upper-layer SF does not send an image, until the last SEQ4 or SEQ5 is switched to, and afterwards, the DDIC keeps refreshing an image at a refresh rate corresponding to the last SEQ4 or SEQ5.

However, after the DDIC decreases the refresh rate, a quantity of hold frames generated during image refreshing of the DDIC increases. In addition, once the upper-layer SF resumes image sending, the upper-layer SF still sends an image at the original image sending frequency. In other words, the image sending frequency used after the SF resumes image sending is higher than the refresh rate at which the DDIC currently refreshes an image. Therefore, in this case, if the upper layer resumes image sending, an image sent may correspond to an active frame of the DDIC, or may correspond to a hold frame. However, the hold frame corresponds to a moment at which the DDIC does not refresh an image. If an image sent by the SF corresponds to the hold frame, the DDIC may be unable to immediately respond to the image to refresh an image, and the new image sent by the upper layer is not immediately displayed on the display screen. Therefore, to ensure that the DDIC can immediately respond to an image sent by the upper-layer SF to refresh an image, it is necessary to ensure that the image sent by the SF corresponds to the active frame of the DDIC. Therefore, when it is specified that the DDIC can only jump switching to the SEQ1, the display driver needs to immediately control, when receiving an image sent by the SF, the DDIC to switch back to the first refresh rate SEQ1.

In addition, in the display technology, a TE signal is generated by the DDIC, and the upper-layer SF usually sends an image based on a TE signal reported by a lower-layer display driver, that is, an image sending frequency of the upper-layer SF module is equivalent to a frequency of reporting the TE signal. Therefore, the frequency of reporting the TE signal by the display driver needs to be consistent with a working frame rate of the upper-layer SF module (a software frame rate synchronization requirement).

When a refresh rate of a conventional DDIC is directly controlled by the upper layer, a frequency of reporting the TE signal by the conventional DDIC usually corresponds to a refresh rate currently used, thereby ensuring consistency with a frame rate of the upper layer. However, in the adaptive refresh rate method, when the display driver controls the DDIC to adaptively decrease a refresh rate based on the configured refresh rate queue SEQ, once the DDIC switches from a high refresh rate to a low refresh rate, a corresponding frequency of reporting the TE signal changes with switching of the refresh rate. In this case, when the upper layer just does not respond to the TE signal to send an image, and actually does not decrease the working frame rate, if the TE signal is reported based on the low refresh rate switched to, the frequency of reporting the TE signal is not synchronized with the working frame rate of the upper layer, which violates the software frame rate synchronization requirement.

Therefore, in the adaptive refresh rate method, to meet the software frame rate synchronization requirement, in a process in which the DDIC adaptively decreases a refresh rate based on the first-type refresh rate queue, the display driver needs to synchronously control the DDIC to disable a TE MASK function, and report, based on the working frame rate of the upper-layer SF, a TE signal generated by the DDIC, that is, a TE skipping function is implemented.

TE MASK is a function that comes with the DDIC and that is used to shield a TE signal between the refresh rates SEQi. When the TE MASK function is enabled, each TE signal between SEQi is shielded, that is, TE signals corresponding to all hold frames in the SEQi are shielded, and the shielded TE signals cannot be reported. However, when the TE MASK function is disabled, the DDIC generates a TE signal at a frequency of 120 Hz, and transmits the TE signal to the display driver for reporting to the upper-layer SF.

The TE skipping function means to report one TE signal to the SF every other TE signal, which is equivalent to skipping reporting some TE signals that need to be reported. A TE signal that is not reported may be referred to as a skipped TE signal. For example, after the TE MASK function is disabled, the DDIC generates the TE signal at the frequency of 120 Hz. Therefore, when the working frame rate of the upper layer is 120 Hz, the display driver may not implement the TE skipping function, and directly reports, at the frequency of 120 Hz, the TE signal generated by the DDIC to the upper-layer SF, so as to ensure that a frequency of reporting the TE is synchronized with a software frame rate. However, when the working frame rate of the upper layer is not 120 Hz, the TE skipping function needs to be implemented, so that the frequency of reporting the TE signal is consistent with the working frame rate of the upper-layer SF, thereby meeting the software frame rate synchronization requirement.

An implementation of the TE skipping function is determined based on whether the DDIC has a TEI function (a hardware function that comes with the DDIC for achieving TE skipping). For a DDIC with the TEI function, such as the first DDIC, because hardware of the first DDIC has the TEI function, the TE skipping function may be directly implemented by using the TEI function of the DDIC. If the TE skipping function needs to be implemented, it is only required to deliver an instruction to the DDIC to control initialization of a register corresponding to the TEI function.

However, for a DDIC without the TEI function, such as the second DDIC, because the TEI function is not configured in hardware of the second DDIC, the TE skipping function is mainly implemented by the display driver through control by using a software program. To be specific, for a TE signal generated by the second DDIC, the display driver reports one TE signal every other TE signal to the upper-layer SF to implement the TE skipping function. For example, when the working frame rate of the upper-layer SF is 60 Hz, a rate of reporting the TE signal also needs to be 60 Hz. Therefore, after the TE MASK function is disabled, the TE signal cannot be reported to the upper-layer SF at 120 Hz. On a basis that the DDIC generates the TE signal at the refresh rate of 120 Hz, the display driver reports one TE signal every other TE signal to the upper-layer SF, so that the TE signal is reported at a rate of 60 Hz, thereby ensuring synchronization with the working frame rate of the upper layer.

It may be learned that, in the image display method, to meet the software frame rate synchronization requirement specified in the display technology, it is ensured that the frequency of reporting the TE signal is synchronized with a frame rate of upper-layer software. In this way, in a process in which the DDIC refreshes an image based on the first-type refresh rate queue, if the display driver determines that the image sending frequency of the upper-layer SF decreases and then decreases the refresh rate of the DDIC, the display driver still controls the DDIC to generate the TE signal based on the original refresh rate, and then reports the TE signal to the SF. Therefore, some of TE signals reported by the display driver may be TE signals to which the upper-layer SF does not respond to send an image, and accordingly the TE signals do not have corresponding image refreshing.

However, in the display technology, to ensure that brightness of an LED-type display screen matches brightness required for image display, and to avoid a display flickering problem caused by image display being excessively dark or excessively bright, image refreshing of the DDIC usually needs to be synchronized with dimming (adjusting the brightness of the display screen). In addition, the DDIC mainly refreshes an image by exchanging the TE signal with the upper layer to obtain a sent image, which is equivalent to that the TE signal is synchronized with image refreshing of the DDIC. Therefore, conventionally, to implement synchronization between image refreshing of the DDIC and dimming, a dimming instruction is mainly delivered in a sync (synchronization) TE manner of Qualcomm. Specifically, when a dimming instruction received by the display driver from the upper layer is located between two TE signals, that is, when the dimming instruction delivered by the upper layer is received after a previous TE signal has been reported but before a next TE signal arrives, the display driver controls the dimming instruction to take effect when the next TE signal arrives. In other words, the display driver waits for the next TE signal to arrive, and controls, in response to the dimming instruction, the DDIC to perform dimming.

Therefore, when there is a TE signal without corresponding image refreshing in the image display method, it is easy to cause the following problem: When a dimming instruction is delivered in the sync TE manner, although the dimming instruction corresponds to the TE signal, a requirement for synchronization between image refreshing of the DDIC and dimming is not met because there is no corresponding image refreshing, which causes a display flickering problem.

In addition, in the image display method, for a DDIC without the TEI function, there is further a case that a display driver software controls to skip and not report a TE signal. To be specific, for the DDIC without the TEI function, the display driver controls, by using a software program, to skip and not report, to the upper-layer SF module, a TE signal generated by the DDIC. Therefore, after some TE signals are skipped and given up reporting by the display driver to become skipped TE signals, it means that the TE signals do not have corresponding image refreshing.

However, because the upper layer of the display driver cannot know which TE signal is controlled by the display driver to become a skipped TE signal, the dimming instruction delivered by the upper layer to the display driver is prone to be delivered before the skipped TE signal, resulting in that the dimming instruction takes effect synchronously with the skipped TE signal without corresponding image refreshing.

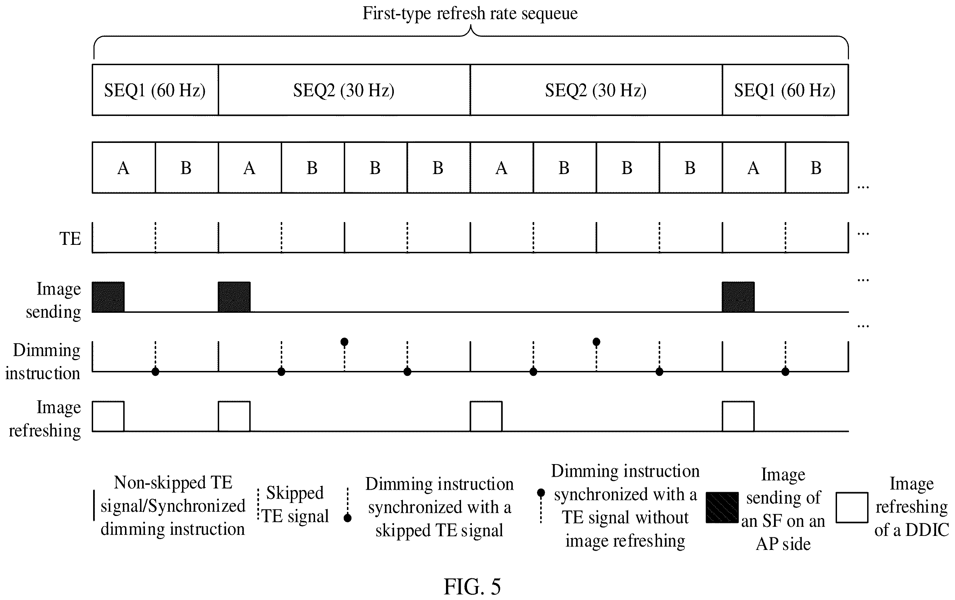

In conclusion, in the existing image display method, there is not only a TE signal without corresponding image refreshing because the upper-layer SF does not respond to the TE signal to send an image, although the TE signal is reported to the upper-layer SF, but also a TE signal without corresponding image refreshing because the TE signal becomes a skipped TE signal after being skipped and not reported. Therefore, on this basis, if the dimming instruction is still delivered in the sync TE manner, the dimming instruction is prone to be synchronized with the two TE signals. This causes desynchronization between dimming and image refreshing of the DDIC, which causes a display flickering problem. FIG. 5 is a schematic diagram that is of desynchronization between image refreshing of a DDIC and delivery of a dimming instruction and that is provided by using a second DDIC without a TEI function as an example according to an embodiment.

In some embodiments, to resolve a display flickering problem caused by image refreshing of the DDIC not synchronized with delivery of the dimming instruction because the dimming instruction is delivered in synchronization with a TE signal without image refreshing, that is, to avoid a dimming instruction, in FIG. 5, delivered in synchronization with a TE without image refreshing, an embodiment of this application provides a display screen brightness adjustment method. The display screen brightness adjustment method is applied to an electronic device, and the electronic device includes a display screen and a display screen driver integrated circuit DDIC corresponding to the display screen. The DDIC may be a first DDIC with a TEI function, or may be a second DDIC without a TEI function.

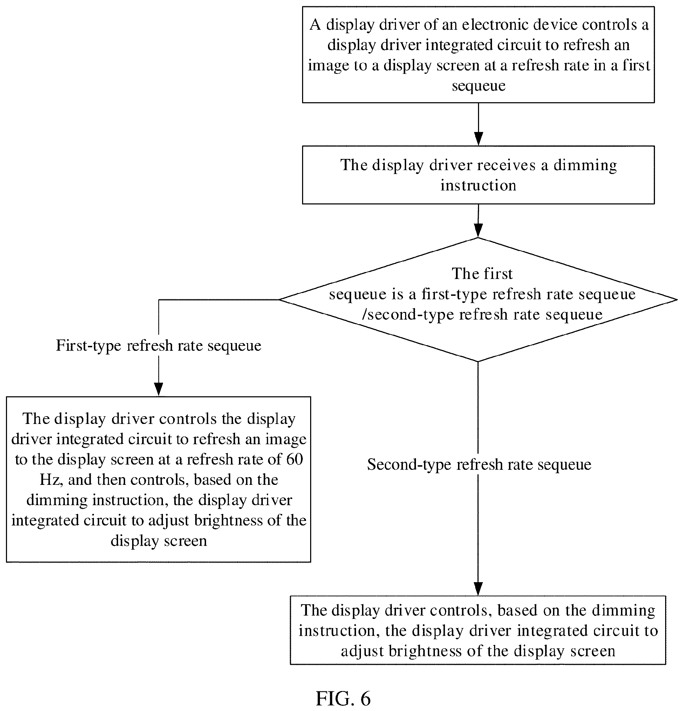

Specifically, referring to FIG. 6, when a display driver of the electronic device controls the DDIC to refresh an image to the display screen at a refresh rate in a first queue, if the display driver receives a dimming instruction (an instruction used to indicate to adjust brightness of the display screen), the display driver responds to the dimming instruction to perform dimming on the display screen based on a type of a refresh rate queue used for current image refreshing of the DDIC, that is, based on the first queue.

The first queue is a first-type refresh rate queue or a second-type refresh rate queue. The first-type refresh rate queue is a refresh rate queue that includes at least two refresh rates and in which the refresh rates are distributed from high to low, and may also be referred to as an adaptive SEQ. The second-type refresh rate queue is a refresh rate queue in which the last refresh rate has a refresh rate value and a refresh rate before the last refresh rate is empty, that is, the last queue value in the second-type refresh rate queue has a corresponding refresh rate and a refresh rate of another queue value is empty. The second-type refresh rate queue may also be referred to as a fixed SEQ. In addition, the dimming instruction may be an instruction automatically delivered to the display driver when the brightness of the display screen needs to be adjusted based on ambient light brightness, may be an instruction automatically delivered to the display driver by the electronic device based on an actual requirement, for example, when the brightness of the display screen needs to be adjusted to reduce power consumption, or may be an instruction received when a user operates a brightness adjustment button on the display screen.

If the first queue is the first-type refresh rate queue, the display driver needs to first control the DDIC to switch from the first-type refresh rate queue to a refresh rate of 60 Hz, that is, the display driver first controls the DDIC to refresh an image to the display screen at the refresh rate of 60 Hz, and then controls, based on the dimming instruction, the DDIC to perform dimming on the display screen to adjust the brightness of the display screen. In addition, to ensure that the DDIC normally refreshes an image after the dimming, the display driver needs to control the DDIC to switch from the refresh rate of 60 Hz to the original first-type refresh rate queue, that is, to control the DDIC to refresh an image to the display screen at a refresh rate in the first-type refresh rate queue.

However, if the first queue is the second-type refresh rate queue, the display driver may determine that there is no TE signal without image refreshing in this case, and may directly respond to the dimming instruction to control the DDIC to perform dimming on the display screen.

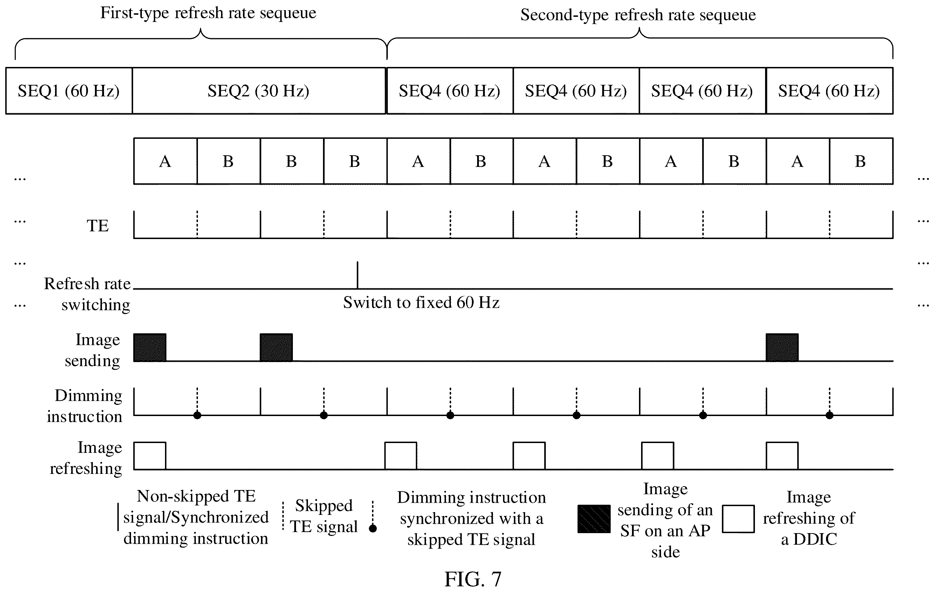

For example, referring to FIG. 7, after the first-type refresh rate queue of the DDCI is switched to the fixed refresh rate of 60 Hz, a TE signal without corresponding image refreshing, which is originally caused by refreshing an image at a refresh rate of 30 Hz in the first-type refresh rate queue, is converted into a TE signal with image refreshing. To be specific, after the refresh rate is switched from 30 Hz to 60 Hz, an image refreshing manner is switched from scanning one and stopping three to scanning one and stopping one, and the TE signal that originally corresponds to a hold frame but has no image refreshing is converted into a TE signal that corresponds to an active frame and that has corresponding image refreshing. Therefore, subsequently, delivering the dimming instruction in a sync TE manner on this basis is to be synchronized with the TE signal with image refreshing, thereby ensuring that image refreshing of the DDIC is synchronized with delivery of the dimming instruction.

In some embodiments, the display driver responds to the dimming instruction to control the display driver integrated circuit to adjust the brightness of the display screen in a conventional sync TE manner of Qualcomm. To be specific, when receiving a TE signal generated by the DDIC, the display driver delivers the dimming instruction to the display driver integrated circuit, so as to ensure that the dimming instruction is synchronized with the TE signal, thereby controlling the display driver integrated circuit to perform dimming.

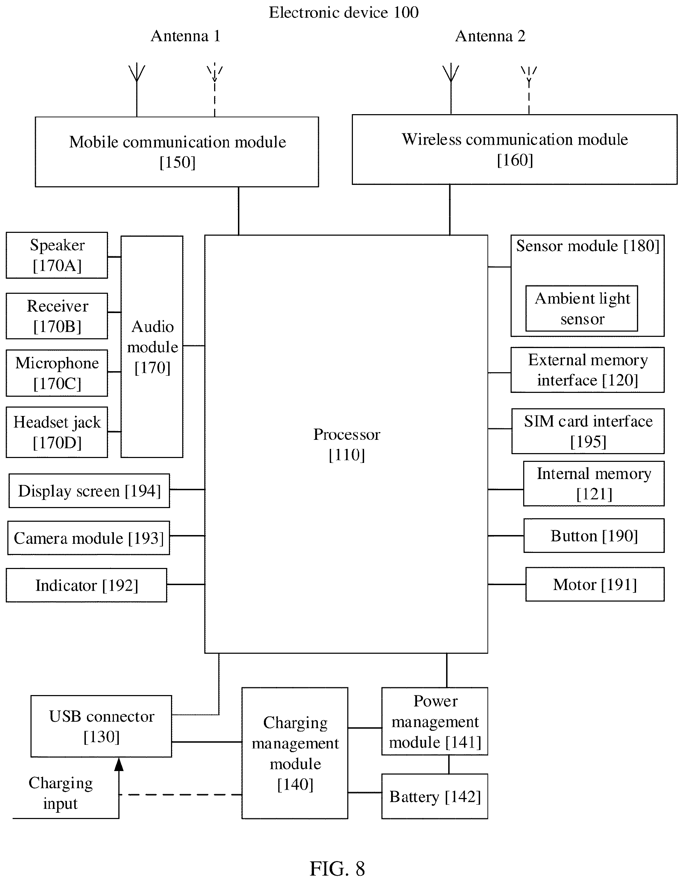

For example, FIG. 8 is a schematic diagram of a structure of an electronic device according to an embodiment of this application.

The electronic device 100 may include at least one of a mobile phone, a foldable electronic device (a foldable mobile phone), a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart household device, or a smart city device. A specific type of the electronic device 100 is not specifically limited in the embodiments of this application.

The electronic device 100 may include a processor 110, an external memory interface 120, an internal memory 121, a universal serial bus (universal serial bus, USB) connector 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera module 193, a display screen 194, a subscriber identification module (subscriber identification module, SIM) card interface 195, and the like. The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure illustrated in this embodiment of this application constitutes no specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components or may be integrated into one or more processors.

The processor 110 may generate an operation control signal based on instruction operation code and a timing signal, to complete control of instruction fetching and instruction execution.

A memory may be further disposed in the processor 110 to store instructions and data. In some embodiments, the memory in the processor 110 may be a cache memory. The memory may store instructions or data that has been used by the processor 110 or that is used at a high frequency. If the processor 110 needs to use the instructions or the data, the processor 110 may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The processor 110 may be connected to modules such as the touch sensor, the audio module, the wireless communication module, a display, and a camera through at least one of the foregoing interfaces.

It may be understood that, an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The external memory interface 120 may be configured to be connected to an external storage card, for example, a Micro SD card, to expand a storage capability of the electronic device 100. The external storage card communicates with the processor 110 through the external memory interface 120, to implement a data storage function, for example, to store files such as music and videos in the external storage card, or to transmit files such as music and videos from the electronic device to the external storage card.

The internal memory 121 may be configured to store computer-executable program code, and the executable program code includes instructions. The internal memory 121 may include a program storage area and a data storage area. The program storage area may store an operating system, an application required by at least one function (for example, a sound playing function or an image playing function), and the like. The data storage area may store data (for example, audio data and a phone book) and the like created during use of the electronic device 100. In addition, the internal memory 121 may include a high-speed random access memory, and may further include a nonvolatile memory, for example, at least one magnetic disk storage device, a flash memory device, or a universal flash storage (universal flash storage, UFS). The processor 110 performs various functional methods or data processing of the electronic device 100 by running the instructions stored in the internal memory 121 and/or the instructions stored in the memory disposed in the processor.

The charging management module 140 is configured to receive a charging input from a charger to charge the battery 142.

The power management module 141 is configured to be connected to the battery 142, the charging management module 140, and the processor 110. The power management module 141 receives an input from the battery 142 and/or the charging management module 140, and supplies power to the processor 110, the internal memory 121, the display screen 194, the camera module 193, the wireless communication module 160, and the like. The power management module 141 may be further configured to monitor parameters such as a battery capacity, a quantity of battery cycles, and a battery health status (leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. The mobile communication module 150 may provide a solution for wireless communication including 2G/3G/4G/5G and the like applied to the electronic device 100.

The wireless communication module 160 may provide a solution for wireless communication that is applied to the electronic device 100 and that includes a wireless local area network (wireless local area networks, WLAN) (for example, a wireless fidelity (wireless fidelity, Wi-Fi) network), Bluetooth (bluetooth, BT), bluetooth low energy (bluetooth low energy, BLE), an ultra wide band (ultra wide band, UWB), a global navigation satellite system (global navigation satellite system, GNSS), frequency modulation (frequency modulation, FM), near field communication (near field communication, NFC), an infrared (infrared, IR) technology, and the like.

In some embodiments, in the electronic device 100, the antenna 1 is coupled to the mobile communication module 150, and the antenna 2 is coupled to the wireless communication module 160, so that the electronic device 100 can communicate with a network and another electronic device by using a wireless communication technology.

The electronic device 100 may implement a display function by using the GPU, the display screen 194, the application processor, and the like. The GPU is a microprocessor for image processing, and is connected to the display screen 194 and the application processor. The GPU is configured to perform mathematical and geometric computing for graphics rendering. The processor 110 may include one or more GPUs that execute program instructions to generate or change displayed information.

The display screen 194 is configured to display an image, a video, and the like. The display screen 194 includes a display panel. In this embodiment of this application, the display panel may be an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like.

In some embodiments, the electronic device 100 may include one or more display screens 194. Different display screens may be controlled by different DDICs based on actual requirements. For example, the electronic device 100 includes a first DDIC with a TEI function and a second DDIC without a TEI function. The first DDIC may control a first display screen, and the second DDIC may control a second display screen.

The electronic device 100 may implement a photographing function by using the camera module 193, the ISP, the video codec, the GPU, the display screen 194, the application processor AP, the neural-network processing unit NPU, and the like.

The electronic device 100 may implement an audio function, for example, music playing or sound recording, by using the audio module 170, the speaker 170A, the receiver 170B, the microphone 170C, the headset jack 170D, the application processor, and the like.

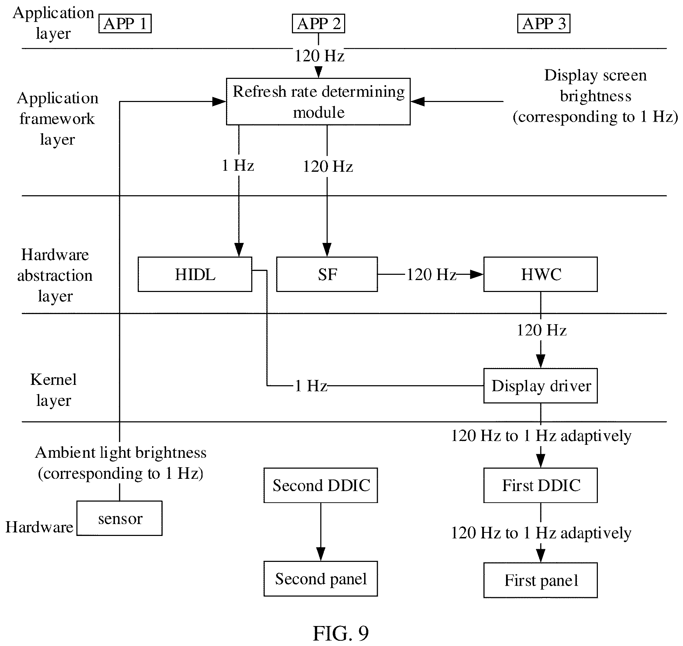

FIG. 9 is a block diagram of a software structure of an electronic device 100 according to an embodiment of this application. FIG. 9 also shows a schematic diagram of system-level interaction in an existing image display method by using a first DDIC as an example.

In a layered architecture, software is divided into several layers, and each layer has a clear role and task. The layers communicate with each other through software interfaces. In some embodiments, an Android system is divided into four layers from top to bottom: an application layer (applications), an application framework (application framework) layer, a hardware abstraction layer (Hardware Abstract Layer, HAL), and a kernel (kernel) layer.

The application layer may include a series of application packages. The application packages may include APPs such as Home, Game, Camera, Gallery, Calendar, Phone, Map, Navigation, WLAN, Bluetooth, Music, Video, and Messages.

The application framework layer provides an application programming interface (application programming interface, API) and a programming framework for an application at the application layer. The application framework layer includes some predefined functions. As shown in FIG. 9, the application framework layer in this embodiment of this application includes a refresh rate determining module.

The hardware abstraction layer runs in user space (user space), encapsulates a driver at the kernel layer, and provides an invoking interface to an upper layer. As shown in FIG. 9, the hardware abstraction layer in this embodiment of this application includes a hardware abstraction layer interface definition language (HAL interface definition language, HIDL) interface, an SF module, and a hardware composer (hardware composer, HWC). The HWC has a function or a capability of combining and displaying image data by using hardware.

The kernel layer is a layer between hardware and software, as shown in FIG. 9. Specifically, in this embodiment of this application, the kernel layer includes at least a display driver. Hardware related may include a DDIC and a display panel (panel). The display driver is configured to drive the DDIC to complete processing and implementation of display. For a foldable electronic device (for example, a foldable mobile phone that includes two display screens: an inner screen and an outer screen), FIG. 2 shows a first DDIC and a second DDIC, and a first panel and a second panel that respectively correspond to the two DDICs. Certainly, the method provided in this embodiment of this application may also be applied to an electronic device that includes only one display screen. Regardless of how many display screens the electronic device includes, a refresh rate switching method provided in this embodiment of this application may be applied to each display screen of the electronic device and a corresponding DDIC of the electronic device.

In some embodiments, because the DDIC receives a dimming instruction when refreshing an image at a refresh rate in a first-type refresh rate queue, the first-type refresh rate queue needs to be first switched to a refresh rate of 60 Hz, and then the first-type refresh rate queue is switched back to after dimming is completed. Therefore, if the dimming instruction is frequently received in a short time, the DDIC needs to be repeatedly controlled to switch a refresh rate, which not only affects image refreshing efficiency of the DDIC but also wastes resources. Based on this, a timer is set in this embodiment of this application for counting down. Once an event in which the first-type refresh rate queue of the DDIC is switched to the refresh rate of 60 Hz occurs in a dimming process, that is, after a display driver integrated circuit starts to refresh an image to the display screen at the refresh rate of 60 Hz, the display driver controls the timer to start to perform countdown of first preset duration. Countdown time may be set based on an actual requirement, for example, 300 ms.

In addition, the following is set: An event in which the refresh rate queue of the DDIC is switched back to the original first-type refresh rate queue is triggered when the countdown ends. In other words, after the countdown ends, the display driver controls the DDIC to refresh an image to the display screen at the refresh rate in the first-type refresh rate queue.

Therefore, as long as the display driver responds to the dimming instruction to first determine whether the timer is counting down, it can be determined whether a refresh rate queue of the DDIC is currently in a state of refreshing an image at the refresh rate of 60 Hz. If yes, the display driver may directly respond to the dimming instruction to control the DDIC to perform dimming. If it is determined that the timer is not counting down, it indicates that the DDIC currently is not in the state of refreshing an image at the refresh rate of 60 Hz. In this case, after the display driver integrated circuit is controlled to refresh an image to the display screen at the refresh rate of 60 Hz, the display driver integrated circuit is controlled, based on the dimming instruction, to adjust brightness of the display screen.

It should be noted that in this embodiment of this application, in response to receiving the dimming instruction, the display driver starts the timer only when the display driver integrated circuit starts to refresh an image to the display screen at the refresh rate of 60 Hz. To be specific, if the display driver does not receive the dimming instruction or the display driver has adjusted the brightness of the display screen based on the dimming instruction, the display driver does not start the timer to perform countdown even if the display driver integrated circuit refreshes an image to the display screen at the refresh rate of 60 Hz.

In this way, if the display driver does not receive the dimming instruction or has adjusted the brightness of the display screen, the timer does not count down, regardless of whether the display driver integrated circuit refreshes an image to the display screen at the refresh rate in the first-type refresh rate queue or refreshes an image to the display screen at the refresh rate in the second-type refresh rate queue. Therefore, if the timer is not counting down, the display driver needs to control, based on the dimming instruction after the display driver integrated circuit refreshes an image to the display screen at the refresh rate of 60 Hz, the display driver integrated circuit to adjust the brightness of the display screen.

In some embodiments, to ensure that buffer time reserved between every two times of dimming is consistent, the display driver responds to the dimming instruction to first initialize the timer to count down again, provided that the display driver receives the dimming instruction again when the countdown of the timer does not end. In addition, after the countdown of the timer ends, to ensure that the DDIC refreshes an image normally, the display driver controls the DDIC to switch back to the original first-type refresh rate queue.

In some embodiments, to resolve a problem that dimming is not synchronized with image refreshing due to TE skipping of second DDIC software without a TEI function, that is, to avoid a dimming instruction, in FIG. 5, delivered in synchronization with a skipped TE, an embodiment of this application provides another display screen brightness adjustment method. The display screen brightness dimming method is applied to an electronic device including the second DDIC.

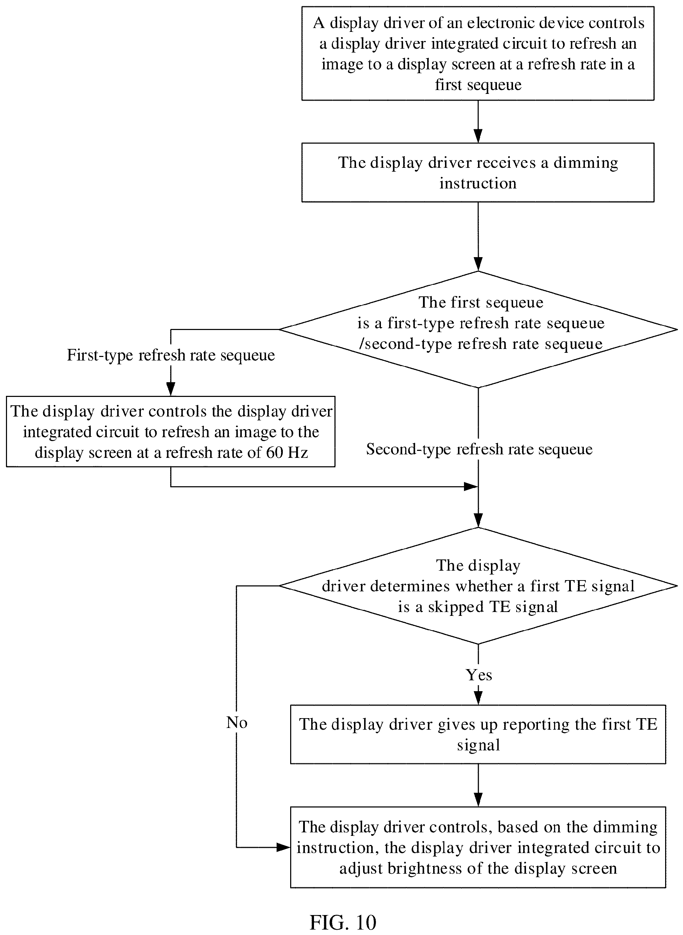

Referring to FIG. 10, in the display screen brightness adjustment method provided in this embodiment of this application, before a step of controlling, based on a dimming instruction, a display driver integrated circuit to adjust brightness of a display screen, the following step is mainly added: A display driver determines whether a TE signal (referred to as a first TE signal below) that is generated by the DDIC, that is closest to time of the dimming instruction, and that is not processed by the display driver is a skipped TE signal.

A non-skipped TE signal is a TE signal that is reported to an SF. Correspondingly, the skipped TE signal is a TE signal that is skipped and not reported to the SF. The DDIC disables a TE signal shielding (TE MASK) function when refreshing an image to the display screen at a refresh rate in the first-type refresh rate queue. After the TE MASK function is disabled, the DDIC generates the TE signal at a frequency of 120 Hz. To make a frequency of reporting the TE signal consistent with a working frame rate of the upper-layer SF to meet a software frame rate synchronization requirement, a TE skipping function is implemented synchronously, and therefore, the non-skipped TE signal and the skipped TE signal are generated. When the working frame rate of the upper layer is 120 Hz, the display driver may not implement the TE skipping function and directly report, to the upper-layer SF at the frequency of 120 Hz, the TE signal generated by the DDIC, so that all are non-skipped TE signals. When the working frame rate of the upper layer is not 120 Hz, the TE skipping function needs to be implemented, so that the frequency of reporting the TE signal is consistent with the working frame rate of the upper-layer SF, and therefore, the non-skipped TE signal and the skipped TE signal are generated.

For the second DDIC without the TEI function, for example, because the TEI function is not configured in hardware of the second DDIC, the TE skipping function is mainly implemented by the display driver through control by using a software program. To be specific, for a TE signal generated by the second DDIC, the display driver reports one TE signal every other TE signal to the upper-layer SF to implement the TE skipping function. For example, when the working frame rate of the upper-layer SF is 60 Hz, a rate of reporting the TE signal also needs to be 60 Hz. Therefore, after the TE MASK function is disabled, the TE signal cannot be reported to the upper-layer SF at 120 Hz. On a basis that the DDIC generates the TE signal at the refresh rate of 120 Hz, the display driver reports one TE signal every other TE signal to the upper-layer SF, so that the TE signal is reported at a rate of 60 Hz, thereby ensuring synchronization with the working frame rate of the upper layer.

Specifically, the display driver receives the first TE signal and determines whether the first TE signal is the skipped TE signal. Whether the TE signal is skipped and not reported is determined by the display driver. Therefore, the display driver may determine, based on whether a previous TE signal corresponding to the first TE signal is the skipped TE signal, whether the first TE signal is the skipped TE signal.

After the display driver determines that the first TE signal is the skipped TE signal, because the skipped TE signal is skipped and not reported, the skipped TE signal has no corresponding image refreshing. Therefore, after receiving the first TE signal generated by the DDIC from the DDIC and giving up reporting the first TE signal, the display driver responds to the dimming instruction to control the DDIC to perform dimming on the display screen.

However, after the display driver determines that the first TE signal is the non-skipped TE signal, it indicates that the TE signal is normally reported and therefore has corresponding image refreshing, so that the display driver may directly respond to the dimming instruction to control the DDIC to perform dimming on the display screen.

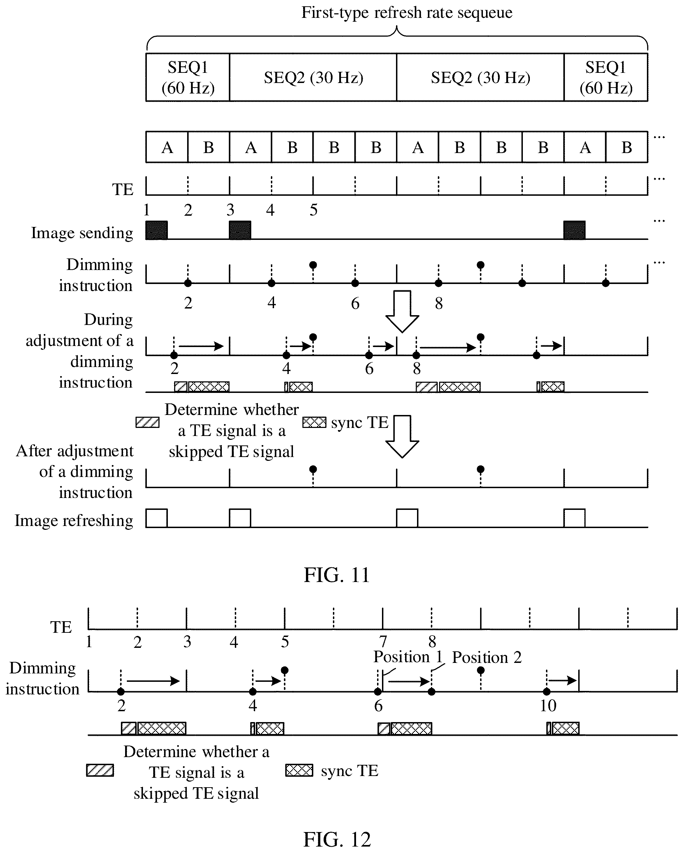

For example, reference is made to FIG. 11. For a moment of delivering a dimming instruction 2, the 1^{st} TE signal is a past TE signal. Therefore, the 1^{st} TE signal may be understood as a TE signal that is closest to the time of the dimming instruction 2 and that is processed by the display driver. However, the 2^{nd} TE signal is a TE signal that is a not generated and not processed signal. Therefore, the 2^{nd} TE signal may be understood as a TE signal that is closest to the time of the dimming instruction 2 and that is not processed by the display driver, that is, the first TE signal. Because the dimming instruction 2 is delivered between the 1^{st} TE signal and the 2^{nd} TE signal, and the 2^{nd} TE signal is a skipped TE signal, the dimming instruction 2 is a dimming instruction that is synchronized with the skipped TE signal. As a result, the dimming instruction 2 is not synchronized with image refreshing of the DDIC.

In this case, to avoid a case that the dimming instruction 2 is not synchronized with image refreshing due to synchronization between the dimming instruction 2 and the 2^{nd} TE signal, the display driver delivers the dimming instruction 2 in a sync TE manner after waiting for the DDIC to generate the 2^{nd} TE signal, and skip and not report the 2^{nd} TE signal, that is, after the display driver skips reporting of the 2^{nd} TE signal. Because a sync TE means that dimming is delivered in synchronization with a TE signal, after the 3^{rd} TE signal is generated, the display driver delivers the dimming instruction 2 to the DDIC. In this case, the dimming instruction 2 is synchronized with the 3^{rd} TE signal, which is equivalent to that the dimming instruction 2 is delayed and delivered to an original position of a dimming instruction 3, and that no dimming instruction is delivered to a position corresponding to the 2^{nd} TE signal. The 3^{rd} TE signal is a non-skipped TE signal for which normal reporting is not skipped, and is a TE signal that normally corresponds to image sending of an AP and image refreshing of the DDIC. Therefore, synchronization with the 3^{rd} TE signal is equivalent to synchronization with image refreshing, so that a problem of desynchronization between the original dimming instruction 2 and image refreshing is resolved.

In addition, a dimming instruction 4 is delivered between the 4^{th} TE signal and the 5^{th} TE signal, and the 5^{th} TE is a non-skipped TE signal that does not need to be skipped. In this case, the display driver may directly deliver the dimming instruction 4 to the DDIC in the sync TE manner, which is equivalent to that the dimming instruction 4 is delayed and delivered to a position corresponding to the 5^{th} TE signal. Therefore, the 4^{th} TE signal, as a skipped TE signal, has no synchronized dimming instruction, so that a problem of desynchronization between the dimming instruction and image refreshing is avoided.

In addition, both a dimming instruction 5 and a dimming instruction 8 shown in FIG. 11 are processed in a same manner, and finally, all dimming instructions can be prevented from being delivered in synchronization with a skipped TE. As shown in FIG. 11, "after adjustment of a dimming instruction" corresponds to a dimming instruction shown on a horizontal line. Moreover, although a dimming instruction corresponding to a TE signal without image refreshing is left after processing in this embodiment of this application, the TE signal without image refreshing can be avoided by switching to a fixed refresh rate of 60 Hz in a preceding phase. Therefore, delivery of all dimming instructions can be synchronized with a TE signal with image refreshing, thereby avoiding desynchronization between the dimming instruction and image refreshing and avoiding a display flickering problem.

It may be learned that, before delivering the dimming instruction to the DDIC, the display driver determines whether a next TE signal is a skipped TE signal that needs to be skipped and not reported, and then delivers the dimming instruction to the DDIC based on an actual situation, so as to resolve a problem that dimming is synchronized with image refreshing due to TE skipping.

In some embodiments, a process in which the display driver in the electronic device determines whether a first TE signal corresponding to a dimming instruction is a skipped TE signal requires specific processing time. Therefore, if a moment of delivering the dimming instruction by the upper layer to the display driver is very close to a moment of generating the first TE signal by the DDIC, the first TE signal may be generated by the DDIC and processed by the display driver before the display driver completes a determining procedure. As a result, backlight is still not synchronized with image refreshing because the first TE signal is missed.

For example, referring to FIG. 12, a dimming instruction 6 is very close to the 7^{th} TE signal (a first TE signal corresponding to the dimming instruction 6). Because the 7^{th} TE signal is not a skipped TE signal, the display driver may determine, in an original manner, that the display driver can directly responds to the dimming instruction 6 in the sync TE manner to control the second DDIC to perform dimming, without waiting for skipping of the 7^{th} TE signal. However, before a determining conclusion of the display driver is made, the 7^{th} TE signal may have been reported by the display driver, and consequently, the 7^{th} TE signal is missed. Therefore, according to a principle of the sync TE, the dimming instruction 6 that should have been synchronized with the 7^{th} TE signal (position 1 shown in FIG. 12) is delayed to be synchronized with the 8^{th} TE signal (position 2 shown in FIG. 12) because the 7^{th} TE signal is missed. However, the 8^{th} TE signal is a skipped TE signal that needs to be skipped and not reported. Because the skipped TE signal has no image refreshing, there is also a problem that delivery of the dimming instruction is not synchronized with image refreshing.

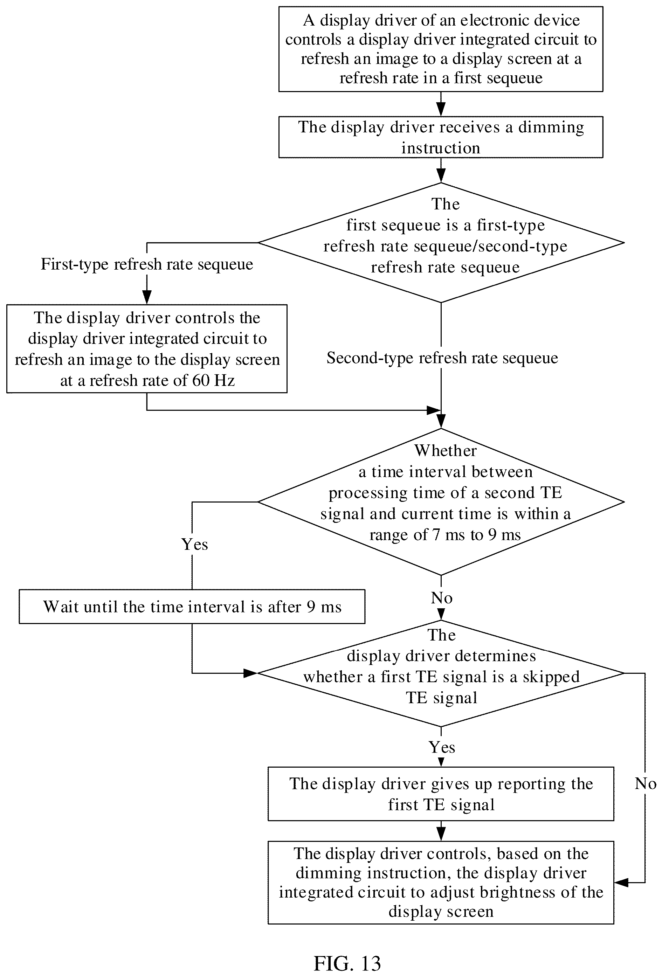

Therefore, referring to FIG. 13, to resolve the problem, in this embodiment of this application, a determining step is added based on the dimming procedure shown in FIG. 10. The display driver determines whether a time interval between current time and processing time of a TE signal (referred to as a second TE signal below) that is generated by the DDIC, that is closest to the dimming instruction, and that is processed is within second preset duration. The processing time is time when the display driver reports or skips reporting the TE signal. The second preset duration is determined by a generation period of a TE signal and determining time for the display driver to determine whether the first TE signal is the skipped TE signal. In this embodiment of this application, referring to FIG. 1, it may be learned that the generation period of the TE signal is 8.3 ms. The determining time required by the display driver is determined by time required for actually running a determining function by the electronic device. In this embodiment of this application, an experiment shows that the determining time is about 1 ms. Based on this, the second preset duration may be set to [7 ms, 9 ms], that is, within a range of 7 ms to 9 ms.

If the time interval is within the range of 7 ms to 9 ms, it indicates that the dimming instruction is relatively far away from the processing time of the second TE signal, and is relatively close to time of the first TE signal, and the first TE signal may be missed. Therefore, the display driver waits for a delay of 9 ms, and then proceeds to the step of determining whether the first TE signal is the skipped TE signal.

If the time interval is not within the range of 7 ms to 9 ms, it indicates that the dimming instruction is relatively far away from the time of the first TE signal, and the first TE signal is not missed. Therefore, the display driver may directly proceed to the step of determining whether the first TE signal is the skipped TE signal.

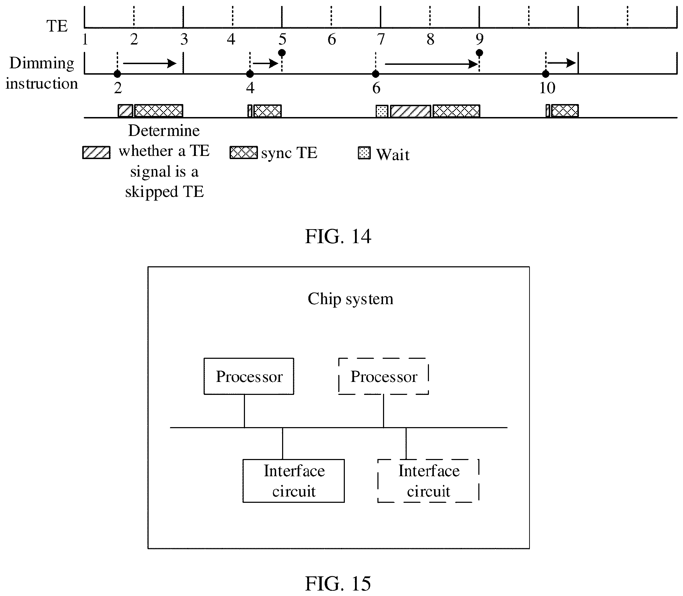

For example, referring to FIG. 14, when receiving the dimming instruction 6, the display driver first determines whether a time interval between the current time and processing time of a second TE signal (the 6^{th} TE signal shown in FIG. 14) corresponding to the dimming instruction 6 is within the range of 7 ms to 9 ms. If the time interval is within the range of 7 ms to 9 ms, it indicates that in this case, the dimming instruction 6 is very close to the 7^{th} TE signal. In this case, the 7^{th} TE signal may be missed if the display driver proceeds to the determining. Therefore, after waiting for a delay of 9 ms to directly miss the 7^{th} TE signal, the display driver proceeds to the step of determining whether the first TE signal is the skipped TE signal. In this case, the first TE signal is the 8^{th} TE signal shown in FIG. 14. Then, through the step of determining the skipped TE signal, it may be determined that the 8^{th} TE is the skipped TE signal. In this case, after waiting for the 8^{th} TE signal to be skipped, the display driver responds to the dimming instruction 6 to control the second DDIC to perform dimming. In this way, the dimming instruction 6 may be synchronized with the 9^{th} TE signal. The 9^{th} TE signal is a non-skipped TE signal and has corresponding image refreshing, so that synchronization between the dimming instruction 6 and image refreshing of the DDIC is ensured.

In some embodiments, it may be learned from the foregoing display screen brightness adjustment method that, in a process in which the display driver controls, based on the dimming instruction, the DDIC to perform dimming, there may be an event in which the first-type refresh rate queue currently applied to the DDIC is switched to the refresh rate of 60 Hz. In addition, after the dimming ends, the first-type refresh rate queue needs to be switched back to. Therefore, when the display driver receives, in the dimming process, a refresh rate queue switching instruction delivered by the upper layer, to avoid affecting the dimming process, the display driver may respond to the refresh rate queue switching instruction after the dimming ends, to configure a new first-type refresh rate queue or a second-type refresh rate queue for the DDIC.

Another embodiment of this application provides an electronic device. The electronic device includes a display screen, a memory, a display driver integrated circuit, and one or more processors. The display screen, the memory, and the display driver integrated circuit are coupled to the processor. For example, the display screen, the memory, and display driver integrated circuit may be coupled to the processor through a bus.

The memory stores one or more computer programs. When the processor executes the computer program, the electronic device is enabled to perform the image display method in any one of the foregoing embodiments. For a structure of the electronic device, refer to the structure of the electronic device 100 shown in FIG. 8. Specifically, the display driver integrated circuit is configured to refresh an image to the display screen at a refresh rate in a first-type refresh rate queue or a second-type refresh rate queue. In this embodiment of this application, a display driver of the electronic device may be a software code or a software module that runs in the processor of the electronic device.

Another embodiment of this application provides a chip system, and the chip system may include the foregoing display driver integrated circuit. As shown in FIG. 15, the chip system includes at least one processor and at least one interface circuit.

The processor and the interface circuit may be interconnected through a line. For example, the interface circuit may be configured to receive a signal from another apparatus (for example, a memory of an electronic device and a processor of the electronic device). For another example, the interface circuit may be configured to send a signal (for example, refreshing an image to a display screen of the electronic device) to another apparatus (for example, the display screen of the electronic device). For example, the interface circuit may read instructions stored in a memory and send the instructions to the processor of the chip system. When the instructions are executed by the processor of the chip system, the instructions may cooperate with the electronic device to perform the following in the foregoing embodiment: refreshing an image to the display screen of the electronic device at the refresh rate in the first-type refresh rate queue or the second-type refresh rate queue. Certainly, the chip system may further include other discrete components. This is not specifically limited in this embodiment of this application.

Another embodiment of this application provides a computer-readable storage medium. The computer-readable storage medium stores a computer program. When the computer program is executed by a processor of an electronic device, the electronic device is enabled to perform the display screen brightness adjustment method in any one of the foregoing embodiments.

An embodiment of this application further provides a computer program product. When the computer program product runs on a computer, the computer is enabled to perform the functions or steps in the foregoing method embodiments.

It can be clearly learned by a person skilled in the art from the foregoing descriptions of the implementations that for convenience and brevity of description, only division into the foregoing functional modules is used as an example for description. In actual application, the foregoing functions may be allocated to different functional modules for implementation based on a requirement, in other words, an internal structure of an apparatus is divided into different functional modules, to complete all or some of the functions described above.

In the several embodiments provided in this application, it should be understood that the disclosed apparatus and method may be implemented in another manner. For example, the described apparatus embodiment is merely an example. For example, the division into the modules or units is merely logical function division, and there may be another division manner in actual implementation. For example, a plurality of units or components may be combined or integrated into another apparatus, or some features may be ignored or not performed. In addition, the displayed or discussed mutual couplings, direct couplings, or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions in the embodiments.

In addition, the functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in the embodiments of this application. The foregoing storage medium includes various media that can store program code, for example, a USB flash drive, a removable hard disk, a read only memory (read only memory, ROM), a random access memory (random access memory, RAM), a magnetic disk, or an optical disc.

The foregoing content is merely specific implementations of this application, but is not intended to limit the protection scope of this application. Any variation or replacement made within the technical scope disclosed in this application shall fall within the protection scope of this application. Therefore, the protection scope of this application shall be subject to the protection scope of the claims.

## Claims

1. A display screen brightness adjustment method, applied to an electronic device, wherein the electronic device comprises a display screen and a display driver integrated circuit, and the method comprises:
controlling, by a display driver of the electronic device, the display driver integrated circuit to refresh an image to the display screen at a refresh rate in a first queue, wherein the first queue is a first-type refresh rate queue or a second-type refresh rate queue, the first-type refresh rate queue is a refresh rate queue that comprises at least two refresh rates and in which the refresh rates are distributed from high to low, and the second-type refresh rate queue is a refresh rate queue in which the last refresh rate has a refresh rate value and a refresh rate before the last refresh rate is empty;
receiving, by the display driver, a dimming instruction, wherein the dimming instruction indicates to adjust brightness of the display screen; and
in response to receiving the dimming instruction, if the first queue is the first-type refresh rate queue, controlling, by the display driver, the display driver integrated circuit to refresh an image to the display screen at a refresh rate of 60 Hz, and then controlling, based on the dimming instruction, the display driver integrated circuit to adjust the brightness of the display screen; or
if the first queue is the second-type refresh rate queue, controlling, by the display driver based on the dimming instruction, the display driver integrated circuit to adjust the brightness of the display screen.

2. The method according to claim 1, wherein the method further comprises:
in response to receiving the dimming instruction, starting, by the display driver, a timer to perform countdown of first preset duration when the display driver integrated circuit starts to refresh an image to the display screen at the refresh rate of 60 Hz; and
after the countdown ends, controlling, by the display driver, the display driver integrated circuit to refresh an image to the display screen at a refresh rate in the first-type refresh rate queue.

3. The method according to claim 2, wherein in response to receiving the dimming instruction, the method further comprises:
determining, by the display driver, whether the timer is counting down; and
if the timer is counting down, controlling, by the display driver based on the dimming instruction, the display driver integrated circuit to adjust the brightness of the display screen; or if the timer is not counting down, controlling, by the display driver, the display driver integrated circuit to refresh an image to the display screen at the refresh rate of 60 Hz, and then controlling, based on the dimming instruction, the display driver integrated circuit to adjust the brightness of the display screen.

4. The method according to claim 2 or 3, wherein the method further comprises:
in response to receiving the dimming instruction, if the timer is counting down, initializing, by the display driver, the timer to count down again.

5. The method according to any one of claims 1-4, wherein the display driver integrated circuit is a display driver integrated circuit without a TEI function; and before the controlling, by the display driver based on the dimming instruction, the display driver integrated circuit to adjust the brightness of the display screen, the method further comprises:
receiving, by the display driver, a first TE signal, and determining whether the first TE signal is a skipped TE signal, wherein the first TE signal is a TE signal that is generated by the display driver integrated circuit, that is closest to receiving time of the dimming instruction, and that is not processed by the display driver; and
if the first TE signal is the skipped TE signal, giving up, by the display driver, reporting the first TE signal, and then controlling, based on the dimming instruction, the display driver integrated circuit to adjust the brightness of the display screen; or
if the first TE signal is a non-skipped TE signal, controlling, by the display driver based on the dimming instruction, the display driver integrated circuit to adjust the brightness of the display screen.

6. The method according to claim 5, before the determining whether the first TE signal is a skipped TE signal, further comprising:
determining, by the display driver, whether a time interval between processing time of a second TE signal and current time is within second preset duration, wherein the second TE signal is a TE signal that is generated by the display driver integrated circuit, that is closest to the receiving time of the dimming instruction, and that is processed by the display driver; and
if the time interval is within the second preset duration, after the time interval between the processing time of the second TE signal and the current time is greater than the second preset duration, determining, by the display driver, whether the first TE signal is the skipped TE signal; or
if the time interval is not within the second preset duration, determining, by the display driver, whether the first TE signal is the skipped TE signal.

7. The method according to claim 6, wherein the second preset duration is determined by a generation period of a TE signal and determining time required by the display driver to determine whether the first TE signal is the skipped TE signal.

8. The method according to any one of claims 1-7, wherein the controlling, by the display driver based on the dimming instruction, the display driver integrated circuit to adjust the brightness of the display screen comprises:
delivering, by the display driver when receiving a TE signal generated by the display driver integrated circuit, the dimming instruction to the display driver integrated circuit, to control the display driver integrated circuit to adjust the brightness of the display screen.

9. The method according to any one of claims 1-8, wherein the method further comprises:
in a process in which the display driver integrated circuit adjusts the brightness of the display screen, receiving, by the display driver, a refresh rate queue switching instruction, and after waiting for the display driver integrated circuit to complete adjustment of the brightness of the display screen, controlling, by the display driver in response to the refresh rate queue switching instruction, the display driver integrated circuit to switch a refresh rate queue.

10. An electronic device, comprising a display screen, a memory, a display driver integrated circuit, and one or more processors, wherein the display screen, the memory, and the display driver integrated circuit are coupled to the processor; the display driver integrated circuit is configured to refresh an image to the display screen at a refresh rate in a first-type refresh rate queue or a second-type refresh rate queue; and the memory stores one or more computer program codes, wherein the computer program code comprises computer instructions, and when the processor executes the computer instructions, the electronic device is enabled to perform the display screen brightness adjustment method according to any one of claims 1-9.

11. A computer-readable storage medium, wherein the computer-readable storage medium stores a computer program, and when the computer program is executed by a processor of an electronic device, the electronic device is enabled to perform the display screen brightness adjustment method according to any one of claims 1-9.
